# EUROPÄISCHE PATENTSCHRIFT

(11) **EP 3 390 133 B1**
(45) Veröffentlichungstag und Bekanntmachung des Hinweises auf die Patenterteilung: **10.07.2019**
(21) Anmeldenummer: 16787832.1
(22) Anmeldetag: 26.10.2016
(51) Int. Cl.: B60L 3/00, B60L 3/04, B60L 53/14, B60L 3/12, H02J 7/00, B60L 53/30

(54) **SICHERHEITSMODUL UND LADESTATION MIT SICHERHEITSMODUL**
SAFETY MODULE, AND CHARGING STATION PROVIDED WITH A SAFETY MODULE
MODULE DE SÉCURITÉ ET STATION DE CHARGE MUNIE D'UN MODULE DE SÉCURITÉ

(30) Priorität: 18.12.2015 DE 102015122217
(43) Veröffentlichungstag der Anmeldung: 24.10.2018
(73) Patentinhaber: innogy SE, 45128 Essen (DE)
(72) Erfinder: HELNERUS, Stefan, 59821 Arnsberg (DE); HEßELMANN, Daniel, 46535 Dinslaken (DE); JUNDEL, Sven, 44137 Dortmund (DE); WAFFNER, Jürgen, 45307 Essen (DE)
(74) Vertreter: Cohausz & Florack
(86) Internationale Anmeldenummer: PCT/EP2016/075759
(87) Internationale Veröffentlichungsnummer: WO 2017/102155

(56) Entgegenhaltungen:
- DE-A1-102009 034 887
- DE-A1-102011 075 846
- US-A1- 2010 174 667
- US-A1- 2011 279 082
- US-A1- 2011 320 056
- US-A1- 2012 140 371
- US-A1- 2012 286 729
- US-A1- 2014 211 345

## Beschreibung

Der Gegenstand betrifft ein Sicherheitsmodul für eine Ladestation für Elektrofahrzeuge sowie eine Ladestation für Elektrofahrzeuge mit einem Sicherheitsmodul.

Die Verbreitung von elektrischen Ladestationen für Elektrofahrzeuge nimmt zu. Elektrofahrzeuge im Sinne dieses Gegenstandes können beispielsweise rein elektrische betriebene Fahrzeuge oder sogenannte Plug-In Hybridfahrzeuge sein, welche beide einen Akkumulator aufweisen, welcher elektrisch geladen werden kann. Ladestationen sind in der Regel in öffentlichen als auch in halböffentlichen Bereichen aufgestellt, so dass sie für eine breite Öffentlichkeit zur Verfügung stehen. Mit dem Ausbau der Infrastruktur an Ladestationen wird die Sicherheit solcher Ladestationen zunehmend relevant. Sowohl beim Laden mit Gleichstrom (DC) als auch beim Laden mit Wechselstrom (AC) müssen elektrotechnische Sicherheitsaspekte berücksichtigt werden. Ein gefahrloser Betrieb der Ladestationen muss stets gewährleistet sein. Insbesondere muss gewährleistet sein, dass der Nutzer vor einem gesundheitsgefährdenden elektrischen Schlag geschützt wird.

Hierfür sind herkömmlicherweise in Ladestationen sogenannte Fehlstromschalter (FI-Schalter) vorgesehen. Auch kann eine Überwachung eines Erdungsfehlers alternativ oder kumulativ vorgesehen sein. Durch diese Schutzschaltungen wird verhindert, dass, falls ein Benutzer in elektrischen Kontakt mit stromführenden Bauteilen der Ladestation gelangt, dieser einen gesundheitsgefährdenden elektrischen Schlag erleidet. Dabei sorgen die Sicherheitsschalter dafür, dass bei einem Erdungsfehler und/oder einem Fehlstrom die elektrische Leitung unterbrochen wird.

Auch im Fall eines Kurzschlusses, d.h. bei hohen Strömen, muss die Ladestation abschalten können. Hierfür sind sogenannte Schütze vorgesehen, welche auch unter hoher Last sicher einen Strom ausschalten können. Mithilfe der Schütze wird der Netzanschluss der Ladestation von der restlichen Elektronik innerhalb der Ladestation getrennt.

Neben den genannten Sicherheitsaspekten können in Ladestationen weitere sicherheitsrelevante Einrichtungen vorgesehen sein, welche die elektrischen Funktionen der Ladestation überwachen und im Fehlerfall entweder selber die elektrische Leitung trennen oder einen entsprechenden Trennimpuls ausgeben.

Bei bekannten Ladestationen sind die jeweiligen sicherheitsrelevanten Einrichtungen jedoch autark und unabhängig voneinander betrieben. Das bedeutet, dass es keinerlei übergeordnete Überwachungen der Funktion der einzelnen Sicherheitselemente gibt. Hierdurch entstehen Sicherheitsrisiken für den Fall des Ausfalls einzelner Sicherheitselemente.

Die Veröffentlichung US 2012/140371 A1 offenbart ein Sicherheitsmodul für eine Ladestation für Elektrofahrzeuge. In dem Sicherheitsmodul ist für jeweils einen der Sensormesswerte eine Mehrzahl an Auslösekennlinien und/oder Auslösekriterien gespeichert.

Die US 2012/286729 A1 offenbart eine Versorgungseinrichtung zur Bereitstellung von elektrischer Energie an einen Verbraucher, die eine dem Verbraucher individuell zugeordnete Schutz- und Überwachungseinrichtung enthält.

Die US 2011/320056 A1 zeigt ein sogenanntes EVSE-System, welches eine Stromversorgungsschaltung für ein elektrisches Fahrzeug mit einer Stromschutzschaltung aufweist. Die Schutzschaltung verhindert, dass ein übermäßiger Strom zum Elektrofahrzeug fließt.

Die DE 10 2011 075846 A1 offenbart eine Vorrichtung, die einen Mikroprozessor aufweist, der mit einem digitalen Signalprozessor verbunden ist. Der Mikroprozessor deaktiviert Schaltanordnungen einer Batterieladevorrichtung, wenn eine Integrität des Signalprozessors nicht gewährleistet ist oder die erfassten Betriebsparameter außerhalb eines Referenzwertbereichs liegen.

Die DE 10 2009 034 887 A1 offenbart eine Ladestation zur Bereitstellung von elektrischer Energie an ein Elektrofahrzeug und enthält eine Sicherungs- und Überwachungseinrichtung, an deren Ausgang das Elektrofahrzeug insbesondere mittels eines Ladekabels anschließbar ist.

Die US 2010/0174667 offenbart eine Batterie, die so konfiguriert ist, dass sie eine Fahrzeugbatterie an einem Fahrzeug von einer Netzstromquelle auflädt und dabei über ein Fahrzeuganschluss und ein Steuermodul verfügt.

Die US 2011/0279082 legt ein Sicherheitsüberwachungsmodul einer Elektrofahrzeugladestation dar, welches den Stromfluss von der Elektrofahrzeugladestation zu einem Elektrofahrzeug steuert. Dabei wird die Schutzsteuerschaltung von zwei oder mehreren Prozessoren gesteuert, welche das Öffnen und Schließen der Stromversorgungsleitung regulieren.

Die US 2014/0211345 offenbart einen Schutzschalter für eine elektrische Last mit ersten und zweiten Anschlüssen, sowie einem Mechanismus zum Öffnen und Schließen der Kontakte zwischen den Anschlüssen.

Die WO 2013/020284 offenbart einen Ladesteg für ein Elektrofahrzeug und ein entsprechendes Erfassungsverfahren dafür, umfassend ein Ladepol, einen Hauptschalter, ein Hauptschütz, ein zweites Schütz, einen Ladekoppler, mindestens einen Sensor und eine Steuereinheit. Dabei wird der Sensor verwendet, um eine Beschleunigung oder einen Neigungswinkel des Ladepols aufgrund einer vorübergehenden äußeren Kraft zu erfassen.

Die DE 20 2011 004 515 beinhaltet eine Vorrichtung zum sicheren Betrieb einer Ladestation mit Rückspeisung für Elektrofahrzeuge, mit elektrischen Schutz- und Überwachungseinrichtungen. Diese sind als fahrzeugbezogen und ladestationsbezogene elektrische Schutzeinrichtungen ausgebildet und für unterschiedliche Betriebsarten ausgelegt.

Die KR 2013 0035498 A offenbart eine Ladevorrichtung zur Umwandlung der Wechselstromquelle in Gleichstrom zur Versorgung eines Elektrofahrzeugs und zur Verbesserung und Erhöhung der Ladegeschwindigkeit und Ladeleistung.

Die CN 101 834 464 A zeigt eine Ladesäule für ein Elektrofahrzeug, umfassend einen Hauptleckschutzschalter, eine Vielzahl von Ladeausgangsschleifen, eine Strommessvorrichtung und eine Steuervorrichtung, wobei der Hauptleckschutzschalter mit einem Stromversorgungsnetz verbunden ist. Die Steuervorrichtung wird zum Steuern des Ein-Aus-Zustands der Ausgangsschleifensteuerschalter und des Hauptleckschutzschalters gemäß einem Stromwert verwendet, der von der Stromerfassungsvorrichtung gemessen wird

Die WO 2013/113400 offenbart ein Verfahren zum Schutz eines Ladekabels in einer Ladevorrichtung zum Laden einer Traktionsbatterie eines elektrisch antreibbaren Fahrzeugs. Bei diesem Verfahren wird die Stromtragfähigkeit des Ladekabels ermittelt und Daten zum Schutz eines Ladekabels, das die ermittelte Stromtragfähigkeit aufweist, vor Überlastung aus einem Speicher ausgelesen, die Daten umfassen aktuelle Werte und zugehörige Abschaltzeiten.

Aus diesem Grunde lag dem Gegenstand die Aufgabe zugrunde, die elektrische Sicherheit von Ladestationen für Elektrofahrzeuge zu erhöhen.

Diese Aufgabe wird durch ein Sicherheitsmodul nach Anspruch 1 sowie eine Ladestation nach Anspruch 14 gelöst.

Gegenständlich ist erkannt worden, dass mit Hilfe eines autarken, unabhängig vom Ladevorgang arbeitenden Sicherheitsmoduls die Funktionalität der einzelnen Sicherheitseinrichtungen in der Ladestation überwacht werden können und in einem Fehlerfall Maßnahmen ergriffen werden können, welche die Sicherheit nach wie vor gewährleisten. Hierfür weist das Sicherheitsmodul einen Prozessor auf. Der Prozessor kann zur Verarbeitung von Sensormesswerten programmiert sein. Mit Hilfe des Prozessors ist es möglich, entsprechend vorprogrammierter Regeln Aktionen einzuleiten, welche vorzugsweise abhängig von den Sensormesswerten an zumindest einem jeweiligen Sensoreingang sind.

Um Aktionen einleiten zu können, hat das Sicherheitsmodul zumindest einen Schaltausgang. Über den Schaltausgang kann das Sicherheitsmodul einen Schaltimpuls ausgeben, mit dessen Hilfe die elektrische Verbindung der Ladestation vom Versorgungsnetz getrennt werden kann. Auch kann eine elektrische Verbindung der Anschlussbuchse der Ladestation für ein Ladekabel von der restlichen Elektronik der Ladestation getrennt werden. Diese Trennung kann innerhalb der Ladestation erfolgen. Auch an anderen Stellen kann mit Hilfe entsprechender Trennschalter eine Trennung bewirkt werden.

Die Sensormesswerte an dem Sensoreingang werden dem Prozessor zugeleitet und entsprechend einer Verarbeitung wird an einem Schaltausgang ein Schaltbefehl ausgegeben. Aus diesem Grunde sind der Sensoreingang und der Schaltausgang mit dem Prozessor in Wirkverbindung geschaltet.

Um einen gefahrlosen Betrieb der Ladestation garantieren zu können, wird nun vorgeschlagen, dass der Prozessor unabhängig von einem Ladevorgang arbeitet. Das bedeutet, dass unabhängig von den Strömen, die während eines Ladevorgangs fließen, der Prozessor die sicherheitsrelevanten Funktionen in der Ladestation überwacht. Hierzu überwacht der Sensor vorzugsweise einen Sensormesswert an dem zumindest einen Sensoreingang.

Sensormesswerte können grundsätzlich von auch verschiedenartigen Sensoren innerhalb der Ladestation stammen. Vorzugsweise sind solche Sensoren auch an den sicherheitsrelevanten Einrichtungen, wie beispielsweise FI-Schalter, Schütz, Anlagenschalter oder dergleichen vorgesehen. Auch können Sensoren unabhängig von sicherheitsrelevanten Einrichtungen beispielsweise zur Gleichstromfehlererkennung und/oder zur Wechselstromfehlererkennung vorgesehen sein. Beispielsweise kann eine Rogowski-Spule als ein Sensor einen Sensormesswert liefern.

Der Prozessor überwacht zumindest einen Sensormesswert unabhängig von dem Ladevorgang, so dass unabhängig von dem Ladevorgang bei einem Überschreiten eines Auslösekriteriums durch den zumindest einen Sensormesswert am Sensoreingang ein Abschaltsignal am Sensorausgang ausgegeben werden kann. Mit Hilfe des Schaltbefehls bzw. Abschaltsignals am Schaltausgang ist es möglich, verschiedenste Funktionen der Ladestation abzuschalten. Ein solches Abschaltsignal kann beispielsweise eine über die Energieleitung oder einen Pilotleiter übermittelte Nachricht an ein mit der Ladestation und elektrisch verbundenes Fahrzeug sein. In dem Fahrzeug kann dieses Signal von einem Laderegler empfangen werden und unmittelbar im Anschluss an das Empfangen eines solchen Abschaltsignals den Ladevorgang unterbinden. In diesem Fall wird durch den Laderegler im Fahrzeug der Stromfluss zwischen der Ladestation und dem Elektrofahrzeug über das Ladekabel unterbunden.

Im Falle eines detektierten Fehlstroms, sei es durch einen FI-Schalter selbst oder sei es durch einen an den Energieleitungen angeordneten Sensor, beispielsweise durch eine Rogowski-Spule oder dergleichen, kann ein Leistungsschutzschalter durch das Abschaltsignal angesteuert werden und die Verbindung zwischen der Ladebuchse der Ladestation und der vorgelagerten Elektronik innerhalb der Ladestation sowie den Netzanschluss trennen.

Auch ist es möglich, dass ein Schütz angesteuert werden kann, welches in Reaktion auf den Empfang eines Abschaltsignals eine Trennung zwischen dem Netzanschluss der Ladestation und der nachgelagerten Elektronik innerhalb der Ladestation bewirkt.

Schließlich kann ein Abschaltsignal auch einen Anlagenschutzschalter ansteuern, welcher vorzugsweise ein mechanischer Schalter ist, mit dem auch unter Last die komplette Ladestation von dem Energieversorgungsnetz getrennt werden kann. Somit hat der Schaltausgang zumindest eine, vorzugsweise mehrere Schaltleitungen zu unterschiedlichen Ausschalteinrichtungen innerhalb der Ladestation. Abhängig von dem Abschaltsignal können wahlweise eine oder auch mehrere dieser Schaltleitungen angesprochen werden, um ein entsprechendes Abschalten über die jeweilige Ausschalteinrichtung zu bewirken. Ein Anlagenschutzschalter kann ergänzend zu einem Schütz als elektrische Sicherung vorgesehen sein.

Durch die unabhängige Überwachung der Sensormesswerte können in dem Sicherheitsmodul verschiedenste Fehler unabhängig voneinander detektiert werden. So ist es in dem Sicherheitsmodul möglich, zunächst zu detektieren, ob die einzelnen sicherheitsrelevanten Bauteile fehlerfrei funktionieren. Beispielsweise hat ein herkömmliches Schütz eine interne Funktionsüberwachung, welche galvanisch entkoppelt von der eigentlichen Energieleitung einen Sensormesswert ausgeben kann. Im Falle eines Ausfalls eines Schützes kann somit ein entsprechender Sensormesswert über den Sensoreingang dem Prozessor zugeleitet werden und gegebenenfalls ein Anlagenschutz aktiviert werden.

Auch kann die Funktion eines Leistungsschutzschalters überprüft werden, wozu beispielsweise ein geeigneter Sensor an dem Leistungsschutzschalter angeordnet ist. Auch ein solcher Sensor kann einen Sensormesswert, vorzugsweise galvanisch entkoppelt vom Energiestrang, über den Sensoreingang dem Prozessor zuleiten. Entsprechend dem Sensormesswert kann der Prozessor Abschaltsignale übermitteln, vorzugsweise beispielsweise an das Schütz.

Auch können Fehlströme unabhängig von der Funktionalität des Leistungsschutzschalters, beispielsweise durch geeignete Spulen oder sonstige Sensoren, beispielsweise Hallsensoren, an den Energieleitungen überwacht werden und im Fehlerfall kann ein Schütz oder ein Leistungsschutzschalter mit Hilfe des Abschaltsignals geöffnet werden.

Mit Hilfe des gegenständlichen Sicherheitsmoduls ist es möglich, verschiedenartigste Sicherheitselemente innerhalb einer Ladestation zu überprüfen. Sicherheitsaspekte können durch die Einzelkomponenten selbst oder durch das Sicherheitsmodul realisiert werden.

Gemäß einem Ausführungsbeispiel wird vorgeschlagen, dass der Prozessor unmittelbar vor einem Ladevorgang den Sensoreingang überprüft. Bevor ein Ladevorgang stattfindet, beispielsweise in dem Moment, wenn ein Fahrzeug gegenüber einer Ladestation seine Ladebereitschaft signalisiert oder in der Ladestation der Ladestrom zugeschaltet werden soll, kann zunächst eine Überprüfung der sicherheitsrelevanten Funktionen stattfinden. Hierzu kann das Sicherheitsmodul mit Hilfe seines Prozessors Sensormesswerte an dem Sensoreingang überprüfen. Dieses Überprüfen der Sensormesswerte führt dazu, dass der Prozessor überprüft, ob einer der Sensormesswerte ein Auslösekriterium erfüllt und in diesem Fall kann der Ladevorgang, noch bevor er gestartet wurde, unterbunden werden. Dies führt dazu, dass erst gar kein Ladestrom auf das Ladekabel gelangt und im Fall einer Fehlbedienung selbst eine Berührung mit dem Ladekabel nicht zu einem elektrischen Überschlag führt.

Gemäß einem Ausführungsbeispiel wird vorgeschlagen, dass der Sensoreingang für den Empfang einer Mehrzahl an Sensormesswerten eingerichtet ist. Der Sensoreingang kann als Oberbegriff für eine Mehrzahl voneinander unabhängig betriebenen Klemmen oder Anschlüsse verstanden werden. An diesen Klemmen oder Anschlüssen können je nach Sensormesswert verschiedenartigste elektronische Baugruppen zur Auswertung der Signale angeordnet sein. Auch kann der Sensoreingang ein digitaler Eingang sein, der digitale Sensormesswerte von einer Vielzahl von Sensoren empfängt. Durch geeignete Parametrierung des Sensoreingangs können die Daten der verschiedenen Sensoren, welche die Sensormesswerte beinhalten, dem Prozessor in einer geeigneten Weise zugeführt werden.

Gemäß einem Ausführungsbeispiel wird vorgeschlagen, dass der Sensoreingang zum Empfangen eines Sensormesswerts eines Sensors an einem Schütz eingerichtet ist. Heutzutage verfügen Schütze über Überwachungseinrichtungen, welche die Schaltfähigkeit der Schütze überwacht. Diese Überwachungseinrichtungen können einen galvanisch von dem eigentlichen Schalter getrennten Ausgang aufweisen, auf dem ein Sensormesswert ausgegeben werden kann. Als Beispiel einer galvanischen Entkopplung kann der Sensor zunächst die Schaltfähigkeit innerhalb des Schützes überwachen und den Zustand des Schützes über einen Optokoppler an einen Ausgang übermitteln. Hierdurch wird eine galvanische Entkopplung zwischen dem Ausgang und dem zu überwachenden Bauteil, hier das Schütz, realisiert. An dem Ausgang liegt der Sensormesswert entweder analog oder digital an. In diesem Zusammenhang sei erwähnt, dass Sensormesswerte stets sowohl analog als auch digital vorliegen können. Je nach der Art des Sensormesswertes kann der Sensoreingang eingerichtet sein. Insbesondere ist es möglich, dass an dem Sensoreingang sowohl Anschlüsse als auch Klemmen für digital kodierte Sensormesswerte als auch für analoge Sensormesswerte vorhanden sein können.

Gemäß einem Ausführungsbeispiel wird auch vorgeschlagen, dass der Sensoreingang zum Empfangen eines Sensormesswertes eines Stromsensors, insbesondere eines Gleichstromsensors eingerichtet ist. Zur Überwachung von Fehlerströmen können beispielsweise Typ A als auch Typ B FI-Schalter vorgesehen sein. Insbesondere die Typ B FI-Schalter können dazu eingerichtet sein, einen Gleichstromfehler zu erfassen. Es ist jedoch auch möglich, einen Gleichstromfehler durch Anordnen eines geeigneten Sensors unmittelbar an der Leitung bzw. an den Leitungen, über die der Ladestrom fließt, anzuordnen. Beispielsweise kann durch eine Spule, insbesondere eine Rogowski-Spule ein Gleichstromfehler an einem Leitungsstrang, über den Ladestrom fließt, erkannt werden.

Gemäß einem Ausführungsbeispiel wird vorgeschlagen, dass der Sensoreingang zum Empfangen eines Sensormesswertes eines Temperatursensors eingerichtet ist. Temperatursensoren können einerseits zum Messen der Temperatur innerhalb der Ladestation als Ganzes vorgesehen sein, als auch unmittelbar an einzelnen Baugruppen innerhalb der Ladestation. Durch Einbeziehung der gemessenen Temperatur kann der Prozessor die Auslösekriterien abhängig von der Temperatur überwachen. Hier können beispielsweise Auslösekennlinien abhängig von der Temperatur überwacht werden. Auch kann die Temperatur selbst gegen ein Auslösekriterium geprüft werden.

Auch ist erkannt worden, dass die Position der Ladestation relevant sein kann. Aus diesem Grunde wird ein Positionssensor vorgesehen, der seinen Sensormesswert dem Sensoreingang zur Verfügung stellt.

Aufgrund unterschiedlicher Vorgaben kann es notwendig sein, verschiedenartige Auslösekennlinien oder Auslösekriterien für ein und denselben Sensormesswert vorzuhalten. Je nach Vorgabe kann dann das entsprechende Auslösekriterium bzw. die entsprechende Kennlinie verwendet werden. Auch kann je nach Vorgabe bestimmt werden, welche Sensormesswerte überhaupt überwacht werden sollen und ein Auslösen eines Abschaltsignals am Schaltausgang bewirken können. Insbesondere aufgrund gesetzlicher Vorgaben können dies höchst unterschiedliche Auslösekennlinien, Auslösekriterien und/oder Sensormesswerte sein, die als sicherheitsrelevant eingestuft werden.

Mit Hilfe des Positionssensors kann in dem Prozessor eine geographische Position der Ladestation ermittelt werden und abhängig von der Position kann aus einem Satz verschiedener Auslösekriterien/-kennlinien eine entsprechende für jeweils einen Sensormesswert bzw. eine geographische Region ausgewählt werden. Auch kann aus einem Satz von Vorgaben diejenige herausgesucht werden, welche bestimmt, welche Sensormesswerte überhaupt zu überwachen sind. Somit ist das Sicherheitsmodul beispielsweise länderübergreifend einsetzbar, ohne das eine Umprogrammierung notwendig wird. Vielmehr kann das Sicherheitsmodul selbsttätig durch Verwendung des Sensormesswertes des Positionssensors die geeigneten Auslösekennlinien/- kriterien und Sensormesswerte bestimmen.

Gemäß einem Ausführungsbeispiel wir vorgeschlagen, dass in dem Sicherheitsmodul, insbesondere in einem Speicherbaustein des Sicherheitsmoduls, für jeweils einen der Sensormesswerte zumindest eine Auslösekennlinie und/oder ein Auslösekriterium gespeichert ist. Wie bereits zuvor erwähnt, können verschiedenartigste Vorgaben vorhanden sein, die verschiedene Sicherheitsaspekte berücksichtigen. Je nach Vorgabe kann dann mit Hilfe des Prozessors die jeweils relevante Auslösekennlinie und/oder das jeweils relevante Auslösekriterium verwendet werden.

Auch kann in dem Sicherheitsmodul festgelegt sein, dass ein Sensormesswert durch den Prozessor mit einer jeweilig ausgewählten Auslösekennlinie und/oder einem Auslösekriterium verglichen wird.

Auch ist es möglich, dass in dem Sicherheitsmodul, wie erwähnt, verschiedene Sätze von Informationen von auszuwertenden Sensormesswerten vorhanden sind und auch diese Informationen, welche in einem Speichermodul gespeichert sind, situationsabhängig ausgewählt werden können. So ist es beispielsweise möglich, dass die zu überwachenden Sensormesswerte vor einem Ladevorgang sich von den zu überwachenden Sensormesswerten während eines Ladevorgangs unterscheiden. Ist ein Ladevorgang noch nicht gestartet, kann es sinnvoll sein, andere Sensormesswerte zu überwachen, als während eines Ladevorgangs. Die jeweiligen Mengen der zu überwachenden Sensormesswerte können sich dabei überschneiden, sie müssen jedoch nicht identisch sein. Somit kann der Prozessor je nach Zustand der Ladestation aus dem Speicher die Information über den Satz der zu überwachenden Sensormesswerte mit den jeweiligen Auslösekriterien auslesen.

Gemäß einem Ausführungsbeispiel wird vorgeschlagen, dass der Schaltausgang mit zumindest zwei voneinander unabhängigen Schaltern verbunden ist, wobei die Schalter jeweils zum elektrischen Trennen eines Netzanschlusses von einer Ladeelektronik eingerichtet sind. Abhängig von den ausgewerteten Sensormesswerten kann es notwendig sein, jeweils einen von zumindest zwei verschiedenen Schaltern zu schalten. Insbesondere kann abhängig von der Position des erkannten Fehlers im Leitungsweg innerhalb der Ladestation ein Abschalten an verschiedenen Stellen notwendig werden. Insbesondere ist erkannt worden, dass ein erster Schalter ein Schütz zwischen dem Netzanschluss und der Ladeelektronik ist und dass ein zweiter Schalter ein Anlagenschutzschalter eines Anlagenschutzes ist. Beispielsweise kann festgestellt werden, wenn ein Fehlstromschutzschalter defekt ist. Ein hierfür relevanter Sensormesswert kann in dem Prozessor ausgewertet werden. Stellt der Prozessor einen solchen Fehler fest, kann beispielsweise ein erster Schalter, beispielsweise ein Schütz, mit Hilfe des Abschaltsignals geöffnet werden.

Auch kann beispielsweise festgestellt werden, dass das Schütz fehlerhaft ist, beispielsweise das die Kontakte des Schützes festgeklemmt oder festgebrannt sind. Dann kann das Schütz nicht mehr schalten. Um einen Fehler zu verhindern, kann es notwendig sein, einen mechanischen Anlagenschutz, welcher ausgehend vom Netzanschluss vor dem Schütz vorgesehen ist, mit Hilfe des Abschaltsignals zu öffnen.

Gemäß einem Ausführungsbeispiel wird vorgeschlagen, dass der Prozessor abhängig von zumindest einem Sensormesswert den zu schaltenden Schalter bestimmt. Der Prozessor kann hierfür auf eine in einem Speicherbaustein hinterlegte Logik zurückgreifen. In dieser Logik kann hinterlegt sein, bei welchem Fehler bzw. bei Erreichen welches Auslösekriteriums von welchem Sensormesswert welcher Schalter zu schalten ist. Abhängig von dieser Logik kann dann der Prozessor bestimmen, dass ein Abschaltsignal für den jeweils bestimmten Schalter abgesetzt wird.

Gemäß einem Ausführungsbeispiel wird vorgeschlagen, dass der Prozessor in Abhängigkeit von einer Position des Sicherheitsmoduls zumindest eines aus einer Mehrzahl gespeicherter Auslösekriterien und/oder Auslösekennlinien auswählt. Wie bereits erläutert, können unterschiedlichste Vorgaben für sicherheitsrelevante Funktionen existieren. Je nach Vorgabe kann dann ein unterschiedliches Auslösekriterium oder eine unterschiedliche Auslösekennlinie relevant sein. Die Auswahl, welches Auslösekriterium bzw. welche Auslösekennlinie relevant ist, kann abhängig von der Position des Sicherheitsmoduls sein. Insbesondere können somit länderspezifische Vorgaben umgesetzt werden, ohne dass die Ladestation jeweils für ein Land angepasst werden muss. Die Anpassung erfolgt automatisch, abhängig von der erkannten Position des Sicherheitsmoduls. Die Erkennung der Position kann durch den Positionssensor erfolgen, welcher einen Sensormesswert repräsentativ für die Position über den Sensoreingang dem Sicherheitsmodul zur Verfügung stellt.

Wie bereits erläutert, ist das Sicherheitsmodul vorzugsweise autark von dem Ladevorgang. Das Sicherheitsmodul arbeitet nicht nur autark von der Logik des Ladevorgangs, sondern ist vorzugsweise auch elektrisch autark von der Ladeelektronik. Hierzu wird vorgeschlagen, dass der Sensoreingang und/oder der Sensorausgang galvanisch von der Elektronik getrennt sind. Durch die galvanische Trennung von Sensoreingang und/oder -ausgang von der Ladeelektronik wird sichergestellt, dass das Sicherheitsmodul elektrisch von der Ladeelektronik getrennt ist und ein Fehler in der Ladeelektronik keinen Fehler in dem Sicherheitsmodul verursacht.

Gemäß einem Ausführungsbeispiel wird vorgeschlagen, dass der Prozessor unmittelbar vor einem Ladevorgang einen Selbsttest durchführt. Ein solcher Selbsttest kann beispielsweise beinhalten, dass der Prozessor in dem Speichermodul die gespeicherte Software überprüft und überprüft, ob die korrekte Software geladen ist. Auch können Fehlerspeicher ausgelesen werden, um festzustellen, ob ein Fehler zuvor registriert wurde. Darüber hinaus können Messwertbereiche der Sensormesswerte erfasst und ausgewertet werden. Mit Hilfe des Selbsttestes kann das Sicherheitsmodul sicherstellen, dass es für die Sicherheitsüberprüfung der Ladestation eingerichtet und funktionsfähig ist.

Der Selbsttest kann auch dazu dienen, über den Sensoreingang Prüfsignale mit den jeweiligen Sensoren auszutauschen, um die Funktionalität der Sensoren sicherzustellen. Auch kann mit Hilfe von Prüfsignalen über den Schaltausgang eine Schaltfähigkeit eines jeweiligen Schalters überprüft werden. Insbesondere können in den Schalter bereits vorhandene Testroutinen aufgerufen werden. Insbesondere können z.B. verklebte Schalter festgestellt werden. Wenn ein Schütz öffnet, müssen z.B. alle Phasen geöffnet sein. Durch eine Überprüfung der Leitfähigkeit im geöffneten Zustand über alle Phasen kann dann z.B. ein verklebter und somit noch geschlossener Schalter detektiert werden, da über diesen der Übergangswiderstand, im Gegensatz zu den anderen Schaltern unter einem Grenzwert liegen wird. Wird beim Selbsttest ein Fehler festgestellt, so wird zumindest einer der Schalter geöffnet.

Gemäß einem Ausführungsbeispiel wird vorgeschlagen, dass bei einem negativen Selbsttest der Prozessor ein Steuersignal zum Unterbinden des Ladevorgangs ausgibt. Ein solches Steuersignal kann beispielsweise über die Ladeelektronik an das Elektrofahrzeug übermittelt werden. In dem Elektrofahrzeug kann dann durch den Laderegler das Starten eines Ladevorgangs unterbunden werden.

Gemäß einem Ausführungsbeispiel wird vorgeschlagen, dass das Sicherheitsmodul ein Steckmodul für einen Anschluss an eine Ladesteuerelektronik aufweist. Somit kann das Steckmodul modular an die Ladesteuerelektronik innerhalb der Ladestation angeschlossen werden. Hierbei ist jedoch darauf zu achten, dass vorzugsweise eine galvanische Entkoppelung des Sicherheitsmoduls von der Leistungselektronik innerhalb der Ladesteuerelektronik gewährleitet bleibt.

Gemäß einem Ausführungsbeispiel wird vorgeschlagen, dass ein Empfangsmodul zumindest zum Empfangen von Auslösekriterien und/oder Auslösekennlinien vorgesehen ist. Das Sicherheitsmodul ist somit von außen steuerbar und paramentrierbar. Insbesondere können von außen über das Empfangsmodul geänderte Auslösekriterien und Kennlinien in das Sicherheitsmodul eingespeist werden.

Ein weiterer Aspekt ist eine Ladestation für Elektrofahrzeuge. Diese Ladestation verfügt über einen Netzanschluss, mit welchem die Ladestation an das Netz eines Energieversorgers angeschlossen werden kann. Ausgehend von dem Netzanschluss ist zunächst ein Anlagenschutzschalter in der Ladestation vorgesehen. Nach dem Anlagenschutzschalter ist ein Schütz vorgesehen und im Anschluss an das Schütz kann die Ladesteuerelektronik vorgesehen sein. Die Ladesteuerelektronik kann über einen Fehlstromschutzschalter abgesichert sein. Ausgangsseitig der Ladesteuerelektronik kann eine Anschlussbuchse für ein Ladekabel vorgesehen sein. In der Ladestation ist ein zuvor beschriebenes Sicherheitsmodul vorgesehen, mit welchem sicherheitsrelevante Einzelaspekte in einem einheitlichen Modul überprüft werden können. Das Sicherheitsmodul ist dabei vorzugsweis in einem eigenen, gekapselten Gehäuse vorgesehen und somit unabhängig von der Ladesteuerelektronik.

Nachfolgend wird der Gegenstand anhand einer Ausführungsbeispiele zeigenden Zeichnung näher erläutert. In der Zeichnung zeigt:
- Fig. 1: eine schematische Ansicht einer Ladestation für Elektrofahrzeuge mit einem gegenständlichen Sicherheitsmodul;
- Fig. 2: eine schematische Ansicht eines Sicherheitsmoduls.

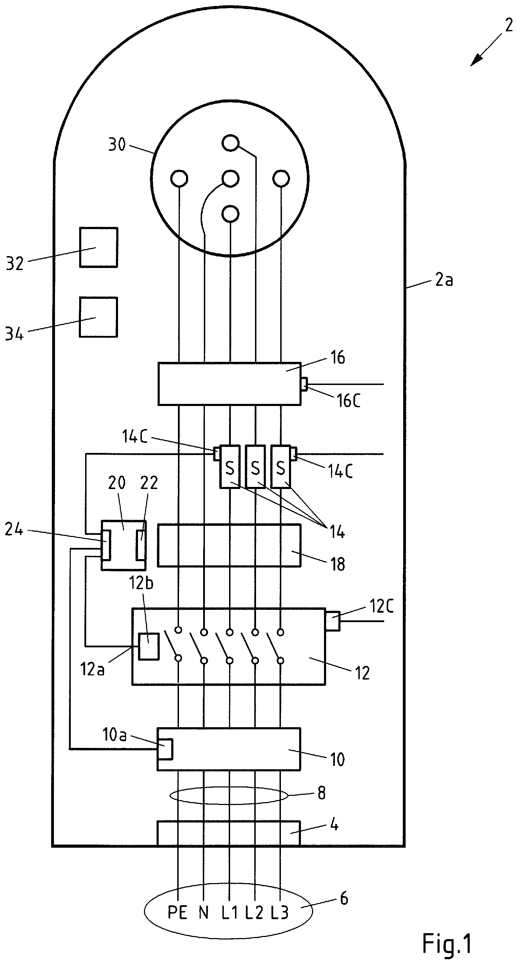

Fig. 1 zeigt eine Ladestation 2. Die Ladestation 2 hat ein Gehäuse 2a. In dem Gehäuse 2a der Ladestation 2 ist ein Netzanschluss 4 vorgesehen. Über den Netzanschluss 4 lässt sich die Ladestation 2 an ein Energieversorgungsnetz 6 anschließen. Das Energieversorgungsnetz 6 kann unterschiedlich gestaltet sein. So kann das Energieversorgungsnetz beispielsweise ein 50Hz-Netz oder ein 60Hz-Netz sein. Auch die Anzahl der Phasen des Energieversorgungsnetzes kann unterschiedlich sein, sowie die Spannung, welche 110V, 230V oder auch eine andere Spannung aufweisen kann. Der gezeigte Netzanschluss 4 ist ein dreiphasiger Anschluss mit drei Phasen L1, L2, L3 einem Nullleiter N und einem Erdungsleiter PE. Zusammen können diese als Energieleitungen 8 in die Ladestation 2 geführt werden.

Zunächst werden die Energieleitungen 8 einem Anlagenschutzschalter 10 zugeführt. Der Anlagenschutzschalter 10 ist ein mechanischer Schalter, welcher auch unter Volllast, d.h. auch bei hohen Strömen, den Netzanschluss 4 von dem Rest der Ladeelektronik innerhalb der Ladestation 2 trennen kann. Der Anlagenschutzschalter 10 hat einen Schalteingang 10a.

An den Anlagenschutzschalter 10 können verschiedene elektrische Elemente angeschlossen werden, welche nicht sicherheitsrelevant sind. In der nachfolgenden Darstellung werden lediglich die elektrischen und elektronischen Baugruppen der Ladestation erwähnt und gezeigt, welche für den Gegenstand relevant sind. Der Übersichtlichkeit halber wird darauf verzichtet, die Ladestation 2 in all ihren Details darzustellen. Vielmehr wird ein Augenmerk auf die Aspekte gelegt, welche für den Gegenstand relevant sind. D.h., dass zwischen zwei gezeigten Baugruppen stets weitere Baugruppen vorgesehen sein können, die für den Ladevorgang relevant sein können. Der Verzicht hierauf bedeutet jedoch nicht, dass der Gegenstand sich nicht auch auf solche Baugruppen bezieht.

Ausgehend von dem Anlagenschutzschalter 10 ist ein Schütz 12 vorgesehen. Das Schütz 12 hat zumindest für alle Energieleitungen 8 einen Hauptstromschalter, welcher von einer Schaltmechanik 12b angesteuert werden. Das Schütz 12 ist vorzugsweise doppelt schließend bzw. öffnend. Über einen Schalteingang 12a lässt sich das Schütz 12 ansteuern. Die Funktionsüberwachung des Schützes 12 kann über geeignete Sensoren erfolgen. Hierbei kann beispielsweise das Verkleben eines Kontaktes festgestellt werden. Dies kann beispielsweise durch das Messen eines Durchkontakts über alle Schließer bei geöffneten Schließern erfolgen, da beim Schütz 12 jeweils nur alle Schalter den gleichen Zustand aufweisen dürfen. Den Zustand des Schützes 12 erfasst ein Sensor, welcher diesen als einen Sensormesswert über einen Sensorausgang 12c ausgibt.

Im Anschluss an das Schütz 12 kann beispielsweise für jede Phase L1-L3 eine Sicherung oder Fehlstromsicherung, insbesondere ein FI-Schalter 14 vorgesehen sein. Die jeweiligen FI-Schalter 14 können einen Sensor aufweisen, der die Funktionsfähigkeit des FI-Schalters 14 überwacht und an einem Sensorausgang 14c ausgibt.

Jeder FI-Schalter 14 kann darüber hinaus einen Schalteingang 14a aufweisen. Über den Schalteingang 14a lässt sich jeder der FI-Schalter 14 gesondert ansteuern und auslösen, so dass die zugehörige elektrische Leitung geöffnet wird.

Die FI-Schalter 14 können auch herkömmliche Sicherungen sein.

Zur Überwachung eines Fehlerstroms, insbesondere eines Gleichstromfehlerstroms können die Energieleitungen 8 mit beispielsweise einem Stromsensor verbunden sein. Auch können Rogowski-Spulen oder andere Strommesser vorgesehen sein. Diese sind in der Fig. 1 als Stromsensoren 16 dargestellt. Die Stromsensoren 16 verfügen über einen Sensorausgang 16c.

Eine nicht näher dargestellte Ladeelektronik 18 kann vorgesehen sein, um einen Ladevorgang mit einem Elektrofahrzeug zu steuern. Die Funktionsweise einer Ladesteuerelektronik 18 ist hinlänglich bekannt und wird nicht näher erläutert. An die Ladesteuerelektronik 18 kann ein gegenständliches Sicherheitsmodul 20 angeschlossen sein. Das Sicherheitsmodul 20 kann jedoch auch getrennt von der Ladesteuerelektronik 18 sein.

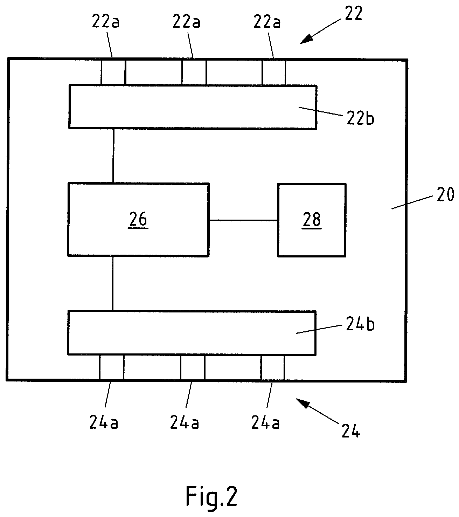

Wie in Fig. 2 dargestellt, hat das Sicherheitsmodul 20 einen Sensoreingang 22 mit einer Mehrzahl von Sensorklemmen 22a. Ferner hat das Sicherheitsmodul 20 einen Schaltausgang 22 mit einer Mehrzahl an Ausgangsklemmen 24a.

Die Eingangsklemmen 22a als auch die Ausgangsklemmen 24a werden über eine jeweilige Elektronik 22b, 24b geschaltet und vorzugsweise digital mit einem Prozessor 26 verbunden. Der Prozessor 26 ist seinerseits mit einem Speicherbaustein 28 verbunden.

Wie in Fig. 1 zu erkennen ist, werden die Schalteingänge 10a, 12a, 14a auf den Schaltausgang 24 des Sicherheitsmoduls 20 gelegt.

Darüber hinaus werden die Sensorausgänge 12c, 14c und 16c auf den Sensoreingang 22 gelegt, was der Übersichtlichkeit halber in der Fig. 1 nicht näher dargestellt ist.

Ausgangsseitig des Stromsensors 16 sind die Energieleitungen 8 mit der Anschlussbuchse 30 bzw. den darin verbauten Kontakten verbunden.

Während des Betriebs der Ladestation 2 ist das Sicherheitsmodul 20 in der Regel stets aktiv.

Das Sicherheitsmodul 20 überprüft mit Hilfe seines Prozessors 26 die an den Sensoreingängen 22a anliegenden Sensormesswerte, in dem es die von der Elektronik 22b zur Verfügung gestellten Messwertdaten auswertet.

Neben den gezeigten Sensormesswerten können weitere Sensormesswerte von beispielsweise einem Temperatursensor 32 oder einem Positionssensor 34, beispielsweise einem GPS-Sensor oder einem Galileo-Sensor zur Verfügung gestellt werden.

Zunächst liest das Sicherheitsmodul 20 bzw. der Prozessor 26 Positionsinformationen von dem Positionssensor 34 aus. Abhängig von der erkannten Position kann der Prozessor 26 aus dem Speichermodul 28 einen Satz von Auslösekriterien bzw. Auslesekennlinien als auch eine Information über den Satz der auszuwertenden Sensormesswerte lesen. Für verschiedene geographische Positionen können verschiedene Sätze an Auslesekriterien und auszuwertender Sensormesswerte in dem Speichermodul 28 hinterlegt werden.

Anschließend erhält das Sicherheitsmodul 20 von der Ladeelektronik 18 beispielsweise die Information darüber, dass ein Ladevorgang beginnen soll.

Das Sicherheitsmodul 20 wird daraufhin die vorgegebenen Sensormesswerte über die Sensoreingänge 22a abfragen. Die abgefragten Sensormesswerte werden mit den geladenen Auslösekriterien bzw. Auslösekennlinien verglichen. Wird ein Auslösekriterium erreicht, so wird über den Schaltausgang 24 zumindest ein Schaltbefehl für einen der Schalter 10, 12, 14 ausgegeben.

Für welchen der Schalter das Schaltsignal ausgegeben wird, ist beispielsweise auch abhängig davon, welches Auslösekriterium erreicht wurde. Es ist in der Regel vorteilhaft, wenn jeweils derjenige Schalter geöffnet wird, der dem jeweils detektierten Fehler unmittelbar vorgelagert ist. D.h., wenn ein Gleichstromfehler am Sensor 16 erkannt wird, werden die Schalter 14 geöffnet. Wird ein Fehler an den Schaltern 14 detektiert, kann das Schütz 12 geöffnet werden und wird ein Fehler im Schütz 12 detektiert, kann der Anlagenschutz 10 aktiviert werden. Diese Schaltung eines von einer Mehrzahl von Schaltern abhängig von detektierten Sensormesswerten bzw. dem Erreichen des Auslösekriteriums kann ebenfalls in dem Speicherbaustein 28 hinterlegt sein.

Wird durch das Sicherheitsmodul 22 kein Fehler festgestellt, so kann der Ladevorgang weitergehen. Dies kann entweder dadurch geschehen, dass das Sicherheitsmodul 20 der Ladeelektronik 18 einen entsprechenden Hinweis gibt, oder dass die Ladeelektronik 18 unabhängig von dem Sicherheitsmodul 20 den Ladevorgang fortsetzt. Der fortgesetzte Ladevorgang würde dann durch das Sicherheitsmodul 20 automatisch unterbrochen werden, wenn ein Fehler festgestellt wurde.

Darüber hinaus kann das Sicherheitsmodul 20 einen Selbsttest durchführen, in dem es Sensormesswerte und Funktionalitäten regelmäßig selbsttätig überprüft. Dies kann durch Abfragen von Sensormesswerten über die Sensoreingänge 22a als auch von Schalterzuständen über die Schaltausgänge 24a erfolgen. Je nachdem, ob der Selbsttest erfolgreich ist oder nicht, kann von dem Sicherheitsmodul 22 unabhängig von einem Ladevorgang die Ladestation 2 durch Öffnen zumindest eines der Schalter 10, 12, 14 deaktiviert werden.

Mit Hilfe des gegenständlichen Sicherheitsmoduls ist es möglich, sicherheitskritische Elemente in einer Ladestation unabhängig von einem Ladevorgang zu überwachen. Auch ist es möglich, unterschiedlichste Regularien hinsichtlich einzelner Sicherheitsaspekte adaptiv erfüllen zu können, ohne die Ladestation 2 an die jeweilige Regularien individuell anpassen zu müssen.

### Bezugszeichenliste

- 2: Ladestation
- 2a: Gehäuse
- 4: Netzanschluss
- 6: Energieversorgungsnetz
- 8: Energieleitungen
- 10: Anlagenschutzschalter
- 10a: Schalteingang
- 12: Schütz
- 12a: Schalteingang
- 12b: Schalter
- 12c: Sensorausgang
- 14: FI-Schalter
- 14a: Schalteingang
- 14c: Sensorausgang
- 16: Fehlstrommesser
- 16c: Schaltausgang
- 18: Ladeelektronik
- 20: Sicherheitsmodul
- 22: Sensoreingang
- 22a: Eingangsklemmen
- 22b: Elektronik
- 24: Schaltausgang
- 24a: Ausgangsklemmen
- 24b: Elektronik
- 26: Prozessor
- 28: Speichermodul
- 30: Anschlussbuchse
- 32: Temperatursensor
- 34: Positionssensor

## Patentansprüche

1. Sicherheitsmodul (20) für eine Ladestation (2) für Elektrofahrzeuge umfassend,
- einen Prozessor (26),
- zumindest einen Sensoreingang (22), und
- zumindest einen Schaltausgang (16c), wobei
- der Sensoreingang (22) und der Schaltausgang (16c) mit dem Prozessor (26) in Wirkverbindung geschaltet sind,
**wobei**
- in dem Sicherheitsmodul (20) für jeweils einen der Sensormesswerte eine Mehrzahl an Auslösekennlinien und/oder Auslösekriterien gespeichert ist,
- der Prozessor (26) unabhängig von einem Ladevorgang zumindest einen Sensormesswert an dem zumindest einen Sensoreingang (22) überwacht,
- der Prozessor (26) einen Sensormesswert mit einer jeweiligen Auslösekennlinie und/oder einem Auslösekriterium vergleicht und bei einem Überschreiten eines Auslösekriteriums durch den Sensormesswert am Sensoreingang (22) ein Abschaltsignal am Schaltausgang (16c) ausgibt,
**dadurch gekennzeichnet,**
- **dass** der Prozessor (26) eine geographische Position der Ladestation (2) von einem in der Ladestation (2) zur Verfügung gestellten Positionssensor (34) liest und
- **dass** der Prozessor (26) in Abhängigkeit von dieser geographischen Position des Sicherheitsmoduls (20) zumindest eines/eine aus der Mehrzahl gespeicherter Auslösekriterien und/oder Auslösekennlinien auswählt.

2. Sicherheitsmodul (20) nach Anspruch 1,
**dadurch gekennzeichnet,**
- **dass** der Prozessor (26) unmittelbar vor einem Ladevorgang den Sensoreingang (22) überprüft.

3. Sicherheitsmodul (20) nach Anspruch 1 oder 2,
**dadurch gekennzeichnet,**
- **dass** der Sensoreingang (22) für den Empfang einer Mehrzahl an Sensormesswerten eingerichtet ist.

4. Sicherheitsmodul (20) nach einem der vorangehenden Ansprüche,
**dadurch gekennzeichnet,**
- **dass** der Sensoreingang (22) zum Empfangen eines Sensormesswerts eines Sensors an einem Schütz (12) eingerichtet ist und/oder
- **dass** der Sensoreingang (22) zum Empfangen eines Sensormesswerts eines Stromsensors, insbesondere eines Gleichstromsensors eingerichtet ist, und/oder
- **dass** der Sensoreingang (22) zum Empfangen eines Sensormesswerts eines Temperatursensor (32)s eingerichtet ist, und/oder
- **dass** der Sensoreingang (22) zum Empfangen eines Sensormesswerts eines Positionssensor (34)s eingerichtet ist.

5. Sicherheitsmodul (20) nach einem der vorangehenden Ansprüche,
**dadurch gekennzeichnet,**
- **dass** der Schaltausgang (16c) mit zumindest zwei voneinander unabhängigen Schalter (12b)n verbunden ist, wobei die Schalter (12b) jeweils zum elektrischen Trennen eines Netzanschluss (4)es von einer Ladeelektronik (18) eingerichtet sind, insbesondere dass ein erster Schalter (12b) ein Schütz (12) zwischen dem Netzanschluss (4) und der Ladeelektronik (18) ist und dass ein zweiter Schalter (12b) ein mechanischer Schalter (12b) eines Anlagenschutzes ist

6. Sicherheitsmodul (20) nach einem der vorangehenden Ansprüche,
**dadurch gekennzeichnet,**
- **dass** der Prozessor (26) abhängig von zumindest einem Sensormesswert den zu schaltenden Schalter (12b) bestimmt.

7. Sicherheitsmodul (20) nach einem der vorangehenden Ansprüche,
**dadurch gekennzeichnet,**
- **dass** der Sensoreingang (22) galvanisch von einer Ladeelektronik (18) getrennt ist und/oder dass der Sensorausgang (12c) galvanisch von der Ladeelektronik (18) getrennt ist.

8. Sicherheitsmodul (20) nach einem der vorangehenden Ansprüche,
**dadurch gekennzeichnet,**
- **dass** der Prozessor (26) unmittelbar vor einem Ladevorgang einen Selbsttest durchführt, insbesondere dass der Prozessor (26) über den Sensoreingang (22) Prüfsignale mit den jeweiligen Sensoren austauscht und/oder dass der Prozessor (26) über den Schaltausgang (16c) eine Schaltfähigkeit eines jeweiligen Schalter (12b)s überprüft.

9. Sicherheitsmodul (20) nach einem der vorangehenden Ansprüche,
**dadurch gekennzeichnet,**
- **dass** bei einem negativen Selbsttest der Prozessor (26) ein Steuersignal zum Unterbinden eines Ladevorgangs ausgibt.

10. Sicherheitsmodul (20) nach einem der vorangehenden Ansprüche,
**dadurch gekennzeichnet,**
- **dass** ein Steckmodul für einen Anschluss an eine Ladesteuerelektronik vorgesehen ist.

11. Sicherheitsmodul (20) nach einem der vorangehenden Ansprüche,
**dadurch gekennzeichnet,**
- **dass** ein Empfangsmodul zumindest zum Empfangen von Auslösekriterien und/oder Auslösekennlinien vorgesehen ist.

12. Ladestation (2) für Elektrofahrzeuge mit
- einem Netzanschluss (4),
- einem an den Netzanschluss (4) angeschlossenen Schalter (12b),
- einem an den Schalter (12b) angeschlossenen Schütz (12),
- einer an das Schütz (12) angeschlossenen Ladesteuerelektronik und
- einem Sicherheitsmodul (20) nach einem der vorangehenden Ansprüche.

## Claims

1. A safety module (20) for a charging station (2) for electric vehicles comprising,
- a processor (26),
- at least one sensor input (22), and
- at least one switching output (16c), wherein
- the sensor input (22) and the switching output (16c) have an operative connection with the processor (26), wherein
- in the safety module (20) for each sensor measured value a plurality of triggering curves and/or one triggering criteria are stored
- the processor (26) monitors at least one measured sensor value at the at least one sensor input (22) independently of a charging process
- the processor (26) compares a sensor measured value with an appropriate triggering curve and/or a triggering criterion and when the measured sensor value at the sensor input (22) exceeds a triggering criterion the processor (26) outputs a switch-off signal at the switching output (16c)
**characterized in that**
- the processor (26) reads a geographical position of the charging station (2) from a position sensor (34) provided within the charging station (2), and
- the processor (26) selects at least one of the plurality of stored triggering criteria and/or triggering curves as a function of a position of the safety module (20).

2. Safety module (20) according to claim 1,
**characterised in that**
- the processor (26) checks the sensor input (22) immediately before a charging process.

3. Safety module (20) according to claim 1 or 2,
**characterised in that**
- the sensor input (22) is configured to receive a plurality of measured sensor values.

4. The safety module (20) according to any one of the above claims,
**characterised in that**
- the sensor input (22) is configured to receive a measured sensor value of a sensor on a contactor (12) and/or
- **in that** the sensor input (22) is configured to receive a sensor measured value of a current sensor, in particular of a direct current sensor, and/or
- **in that** the sensor input (22) is configured to receive a sensor measured value of a temperature sensor (32), and/or
- **in that** the sensor input (22) is configured to receive a sensor measured value of a position sensor (34).

5. Safety module (20) according to any one of the above claims,
**characterised in that**
- the switching output (16c) is connected with at least two switches (12b) that are independent of one another, wherein each of the switches (12b) is configured to electrically isolate a mains connection (4) from the charging electronics (18), in particular **in that** a first switch (12b) is a contactor (12) between the mains connection (4) and the charging electronics (18) and **in that** a second switch (12b) is a system-protective circuit breaker.

6. The safety module (20) according to any one of the above claims,
**characterised in that**
- the processor (26) determines the switch (12b) to be switched depending on at least one sensor measured value.

7. The safety module (20) according to any one of the above claims,
**characterised in that**
- the sensor input (22) is galvanically isolated from charging electronics (18) and/or **in that** the sensor output (12c) is galvanically isolated from the charging electronics (18).

8. The safety module (20) according to any one of the above claims,
**characterised in that**
- immediately before a charging process the processor (26) performs a self-test, in particular **in that** the processor (26) exchanges test signals via the sensor input (22) with the respective sensors (12b) and/or **in that** the processor (26) checks a switching capability of a respective switch via the switching output (16c).

9. The safety module (20) according to any one of the above claims,
**characterised in that**
- in the event of a negative self-test of the processor (26) a control signal is transmitted to prevent the charging process.

10. The safety module (20) according to any one of the above claims,
**characterised in that**
- a plug-in module is provided for a connection to the charging control electronics.

11. The safety module (20) according to any one of the above claims,
**characterised in that**
- a receiver module is provided for receiving triggering criteria and/or triggering curves.

12. A charging station (2) for electric vehicles having
- a mains connection (4),
- a system-protective circuit breaker connected at the mains connection (4),
- a contactor (12) connected to the system-protective circuit breaker,
- charging control electronics connected to the contactor (12), and
- a safety module (20) according to any one of the above claims.

## Revendications

1. Module de sécurité (20) pour un poste de charge (2) pour véhicule électrique, comprenant
- un processeur (26),
- au moins une entrée de capteur (22), et
- au moins une sortie de commutation (16c), où
- l'entrée de capteur (22) et la sortie de commutation (16c) sont connectés au processeur (26) par une liaison active,
Où
- une multitude de caractéristiques de déclenchement et/ou de critères de déclenchement sont enregistrés dans le module de sécurité (20) pour chaque valeur mesurée du capteur,
- le processeur (26) compare une valeur mesurée du capteur avec une caractéristique de déclenchement et/ou un critère de déclenchement et en cas de dépassement d'un critère de déclenchement par la valeur mesurée de capteur à l'entrée de capteur (22), un signal d'arrêt est émis à la sortie de commutation (16c),
**Caractérisé en ce que**
- le processeur (26) lit une position géographique du poste de charge (2) provenant d'un capteur de position (34) présent dans le poste de charge (2), et
- le processeur (26) choisit au moins l'un parmi la multitude de critères de déclenchement et/ou caractéristiques de déclenchement enregistrés en fonction de cette position géographique du module de sécurité (20).

2. Module de sécurité (20) selon la revendication 1, **caractérisé en ce que**
- le processeur (26) vérifie l'entrée de capteur (22) directement avant le processus de charge.

3. Module de sécurité (20) selon la revendication 1 ou 2, **caractérisé en ce que**
- l'entrée de capteur (22) est conçue pour la réception d'une multitude de valeurs mesurées du capteur.

4. Module de sécurité (20) selon l'une quelconque des revendications précédentes, **caractérisé en ce que**
- l'entrée de capteur (22) est conçue pour la réception d'une valeur mesurée d'un capteur pour la protection (12) et/ou
- l'entrée de capteur (22) est conçue pour la réception d'une valeur mesurée d'un détecteur de courant, en particulier un détecteur de courant DC, et/ou
- l'entrée de capteur (22) est conçue pour la réception d'une valeur mesurée d'un capteur de température (32), et/ou
- l'entrée de capteur (22) est conçue pour la réception d'une valeur mesurée d'un capteur de position (34).

5. Module de sécurité (20) selon l'une quelconque des revendications précédentes, **caractérisé en ce que**
- la sortie de commutation (16c) est connectée à au moins deux commutateurs (12b) indépendants, où les commutateurs (12b) sont chacun destinés à la séparation électrique d'un raccordement au réseau (4) et d'une électronique de charge (18), en particulier **en ce qu'**un premier commutateur (12b) est une protection (12) entre le raccordement au réseau (4) et l'électronique de charge (18) et **en ce que** le deuxième commutateur (12b) est un commutateur mécanique (12b) d'une protection de l'installation.

6. Module de sécurité (20) selon l'une quelconque des revendications précédentes, **caractérisé en ce que**
- le processeur (26) détermine le commutateur (12b) à déclencher en fonction d'au moins une valeur de capteur.

7. Module de sécurité (20) selon l'une quelconque des revendications précédentes, **caractérisé en ce que**
- l'entrée de capteur (22) est séparé de manière galvanique d'une électronique de charge (18) et/ou la sortie de capteur (12c) est séparé de manière galvanique d'une électronique de charge (18)

8. Module de sécurité (20) selon l'une quelconque des revendications précédentes, **caractérisé en ce que**
- le processeur (26) réalise un autotest immédiatement avant un processus de charge, en particulier **en ce que** le processeur (26) échange un signal de test avec chacun des capteurs via l'entrée de capteur (22) et/ou **en ce que** le processeur (26) évalue une capacité de commutation de chaque commutateur (12b) via la sortie de commutation (16c).

9. Module de sécurité (20) selon l'une quelconque des revendications précédentes, **caractérisé en ce que**
- en cas d'autotest négatif, le processeur (26) émet un signal de commande pour l'arrêt d'un processus de charge.

10. Module de sécurité (20) selon l'une quelconque des revendications précédentes, **caractérisé en ce que**
- un module enfichable est prévu pour le raccordement à une électronique de charge.

11. Module de sécurité (20) selon l'une quelconque des revendications précédentes, **caractérisé en ce que**
- un module de réception est prévu au moins pour la réception des critères de déclenchement et/ou des caractéristiques de déclenchement.

12. Poste de charge (2) pour véhicule électrique, comportant
- un raccordement au réseau (4),
- un commutateur (12b) raccordé au raccordement au réseau (4),
- une protection (12) raccordée au commutateur (12b),
- une électronique de charge raccordée à la protection (12), et
- un module de sécurité (20) selon l'une des revendications précédentes.
